# DEMANDE DE BREVET EUROPEEN

(11) **EP 3 037 263 A1**
(43) Date de publication de la demande: **29.06.2016**
(21) Numéro de dépôt: 14307136.3
(22) Date de dépôt: 22.12.2014
(51) Int. Cl.: B32B 33/00, B32B 38/14, B42D 25/378

(54) **Carte à effet visuel spécifique et procédé de fabrication associé**

(71) Demandeur: GEMALTO SA, 92190 Meudon (FR)
(72) Inventeur: Kodjagueuzian, Gilles, 92190 MEUDON (FR); Karafotis, Stephane, 92190 MEUDON (FR); Andrieux, David, 92190 MEUDON (FR)
(74) Mandataire: Cassagne, Philippe M.J.

(57) **Abrégé**

La carte comporte une couche de substrat opaque (11) PVC et une couche de substrat PVC translucide ou transparente (12), et une couche d'encre d'impression à effet miroir entre les deux couches de substrat dont les pigments changent d'orientation lors de la lamination, la couche d'encre d'impression à effet miroir assurant la réflexion de lumière à travers la couche de substrat translucide ou transparente et procurant un effet visuel de tôle froissée ou cabossée.

## Description

La présente invention concerne la personnalisation graphique de documents multicouches, tels que des cartes de norme ISO 7810, que l'on désignera par la suite par le terme générique de «carte». L'invention concerne plus particulièrement un procédé de fabrication par lamination de telles cartes, afin de leur donner un effet visuel spécifique, ainsi que les cartes obtenues par ce procédé.

Afin de créer un effet visuel spécifique sur un document multicouches, il est connu de reproduire sur chaque document un motif marbré composé d'au moins deux couleurs au moyen d'une impression. Cependant, ce motif sera identique pour chaque document imprimé et son rendu peut être altéré par les traitements et protections appliquées postérieurement au document.

Un autre moyen connu de réaliser un effet visuel marbré, est l'impression d'un premier motif sur le document suivi d'une impression d'un second motif avec une encre qui lors de l'évaporation des solvants qu'elle contient, forme des fissures au travers desquelles le premier motif est visible. L'effet visuel marbré est ici aléatoire mais son rendu peut également être altéré par les traitements et protections appliquées postérieurement au document. De plus, l'utilisation d'une encre comprenant des solvants permettant la formation de fissures peut entrainer des surcoûts de fabrication car il y a nécessité d'un temps de séchage pour l'évaporation des solvants afin que l'effet visuel marbré soit satisfaisant.

On connaît aussi, par EP-2705958, une carte présentant un effet visuel marbré aléatoire, obtenu en conséquence de la fissuration d'une couche imprimée sur un substrat et recouverte d'une couche de protection translucide, la fissuration se produisant lors de la lamination de l'ensemble des couches. Du fait de cette fissuration de la couche imprimée, le substrat laisse apparaître sa surface localement au niveau des fissures, l'ensemble étant visible à travers la couche de protection translucide. Par le jeu de motifs imprimés préalablement sur le substrat, et de motifs de la couche imprimée en second lieu et qui se trouve fissurée de manière aléatoire par la lamination, on obtient des effets marbrés recherchés.

La présente invention a pour but de proposer un nouveau procédé de fabrication de carte permettant d'obtenir une carte présentant un nouvel effet visuel aléatoire et durable dans le temps. Elle vise aussi à permettre l'obtention de ce nouvel effet de manière simple et économique, par des étapes de procédé de type usuel pour la réalisation de cartes, tels que des cartes bancaires, cartes d'identification, etc.

Avec ces objectifs en vue, l'invention a pour objet un procédé de fabrication d'une carte multicouche présentant un effet visuel spécifique, du type selon lequel on dispose entre une couche de base de substrat opaque et une couche de substrat translucide ou transparente, une couche d'encre d'impression apte à se transformer lors d'une étape de lamination de la carte, en conséquence des contraintes de température et de pression exercées lors de ladite lamination, puis on procède à ladite lamination.

Selon l'invention, le procédé est caractérisé en ce que la couche d'encre d'impression comporte une encre à effet miroir dont les pigments changent d'orientation lors de la lamination, procurant un effet visuel de tôle froissée ou cabossée.

Par encre à effet miroir, on comprendra une encre qui, après avoir été déposée sur un substrat transparent ou translucide, assure une réflexion au moins partielle de la lumière au travers de ce substrat.

Les inventeurs ont découvert que, suite aux contraintes de température et pression imposées lors de la lamination, le fluage de la matière du substrat entraine un changement aléatoire d'orientation des pigments de l'encre, provoquant un effet de tôle froissée, ou tôle cabossée, comme on le verra par la suite.

Selon une disposition particulière, la couche d'encre à effet miroir est déposée sur le substrat transparent ou translucide, et la couche de substrat opaque est ensuite placée contre la couche d'encre ainsi déposée. Préférentiellement, l'encre est déposée par sérigraphie, pour obtenir une épaisseur suffisante pour obtenir l'effet recherché. Typiquement, on utilisera une toile de sérigraphie ayant une maille comprise entre 77 et 150 1/cm. L'épaisseur finale, après lamination, de l'encre déposée est typiquement de 5 à 15 µm.

Selon une autre disposition particulière, la couche de base de substrat est blanche dans sa masse.

Selon encore une autre disposition particulière, la couche de substrat transparent, ainsi que la couche de substrat opaque, sont en PVC. Il a été constaté par les inventeurs que la modification de l'encre conduisant à l'effet recherché ne se produit pas si le substrat est par exemple en polycarbonate. En effet, avec du polycarbonate, les paramètres de lamination, tels que température et pression notamment, sont différents de ceux utilisé pour des couches de substrat en PVC et ont un effet négatif sur l'encre : changement de couleur, dégradation de l'aspect final. De plus, le polycarbonate ne fluant pas à la lamination, l'effet souhaité de tôle froissée ou cabossée n'est pas révélé.

Préférentiellement l'encre à effet miroir est une encre à séchage par rayonnements ultra-violets, de composition :
50 à 93,5 % de 2-butoxyéthanol,
5 à 10% d'aluminium en poudre stabilisé,
1 à 2,5 % d'acétone,
0,5 à 1 % de 3-(2-Aminoethylamino)propyltrimethoxysilane.

Selon une disposition préférentielle, l'étape de lamination, propre à entraîner un changement d'orientation des pigments de l'encre à effet miroir, comporte au moins :
- un premier traitement à une température comprise entre 110 et 150 °C, avec une pression de 80 à 120N/cm² pendant 10 à 20 min,
- un second traitement à une température comprise entre 14 et 18 °C avec une pression de 250 à 290N/ cm² pendant 10 à 20 min.

Outre ces traitements spécifiques à l'invention, la fabrication de la carte pourra également comporter des opérations complémentaires d'impression, typiquement d'impression offset, sur l'une ou les deux faces de l'assemblage précité comportant les deux couches de substrat enserrant la couche d'encre à effet miroir, ainsi que des opérations classiques de mise en place de couches de protections sur les deux faces ainsi imprimées ou non.

Selon une disposition préférentielle, on déposera une couche d'encre telle que définie ci-dessus sur deux couches de PVC transparent, et on place ces deux couches respectivement de part et d'autre de la couche de PVC opaque, pour assurer l'obtention de l'effet de tôle froissée ou cabossée des deux côtés de la carte finalement obtenue. On peut toutefois réaliser une carte présentant cet effet sur une seule face, en utilisant une couche de substrat opaque et une seule couche de substrat PVC transparent ou translucide sur laquelle on aura déposée une couche d'encre à effet miroir, comme indiqué précédemment.

L'invention a aussi pour objet une carte à effet visuel spécifique, typiquement obtenue par le procédé décrit précédemment, ladite carte comportant une couche de base de substrat opaque et une couche de substrat translucide ou transparente, et une couche d'encre d'impression à effet miroir entre les deux couches de substrat, assurant la réflexion de lumière à travers la couche de substrat translucide ou transparente, la couche d'encre d'impression ayant des pigments orientés dans différentes directions, procurant un effet visuel de tôle froissée ou cabossée.

Selon des particularités complémentaires :
- l'épaisseur de la couche d'encre à effet miroir est typiquement de 5 à 15 µm.
- la couche de substrat opaque est blanche dans sa masse.
- la couche de substrat transparente ou translucide, et la couche de substrat opaque sont en PVC.
- préférentiellement l'encre à effet miroir est une encre à séchage par rayonnements ultra-violets, de composition :
   50 à 93,5 % de 2-butoxyéthanol,
   5 à 10% d'aluminium en poudre stabilisé,
   1 à 2,5 % d'acétone,
   0,5 à 1 % de 3-(2-Aminoethylamino)propyltrimethoxysilane.
- la carte comporte une couche médiane opaque en PVC blanc ; et comporte sur les deux faces de cette couche opaque une couche de substrat transparente ou translucides enserrant entre celles-ci et la couche médiane une couche d'encre à effet miroir,
- la carte comporte des couches de protections sur les deux faces.

D'autres caractéristiques et avantages apparaîtront dans la description qui va être faite d'une carte conforme à l'invention, ainsi que du procédé de fabrication de cette carte.

On se reportera aux dessins annexés dans lesquels :
- la figure 1 est une vue schématique en coupe d'une carte conforme à l'invention.
- la figure 2 est une vue illustrant l'aspect visuel de la carte après lamination.

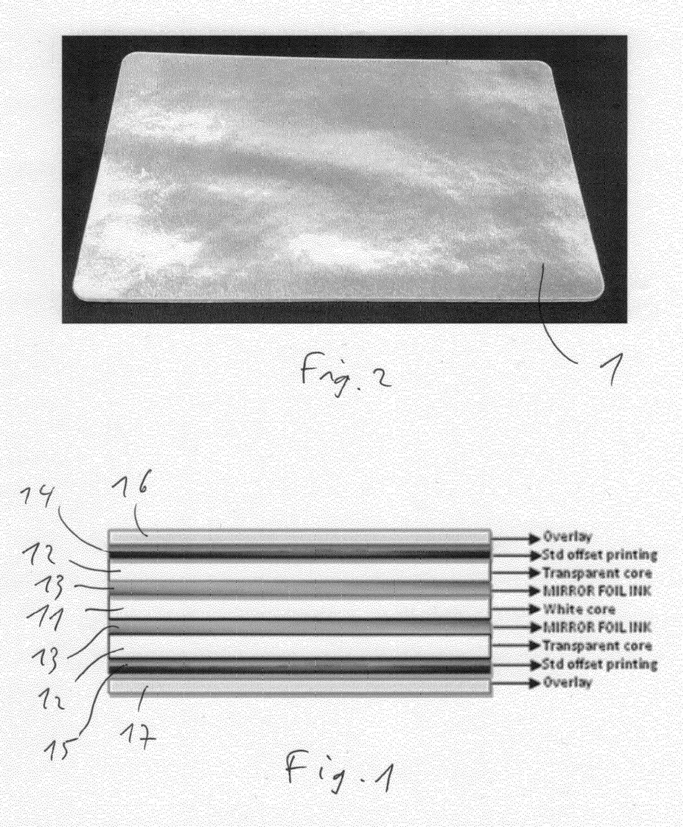

La figure 1 montre une vue en coupe d'une carte 1 de norme ISO 7810. Cette carte 1 peut par exemple être une carte bancaire de paiement, d'identification, d'identité ou encore une carte magnétique, à puce ou à communication en champ proche (NFC pour l'acronyme anglais de Nier Field Communication). Son épaisseur est typiquement de l'ordre de 0,8 à 1,2 mm.

La carte 1 comporte une couche de base médiane 11 de substrat en PVC opaque blanc et, sur chaque face de cette couche de base, une couche de substrat transparent ou translucide 12, en PVC transparent ou translucide.

La carte comporte de plus, entre les couches de substrat 11 et 12, une couche d'encre à effet miroir 13, d'épaisseur de l'ordre de 10 µm. Cette couche d'encre, dont l'obtention sera détaillée par la suite, réfléchit la lumière incidente traversant la couche de substrat transparent 12 et assure un effet visuel spécifique, aléatoire, donnant un effet de tôle cabossée ou de tôle froissée, comme cela est illustré par la figure 2.

On notera que cette couche 13 d'encre à effet miroir peut s'étendre sur toute la surface de la carte 1, comme illustré sur la figure 2, mais pourrait aussi s'étendre sur seulement une partie de cette surface. Une puce ou une antenne ou autre composant électronique nécessaire au fonctionnement de la carte peuvent être intégrés dans ou entre les deux couches de substrat 11 et 12.

Dans l'exemple présenté figure 1, la carte comporte en plus, sur les faces opposées de l'ensemble formé par les couches de substrat incorporant entre elles le film d'encre miroir, des impressions 14, 15, de type courant, réalisées en offset, à visée informative ou décorative. La carte comporte encore, sur chaque face, une couche de protection 16, 17 transparente ou translucide.

La carte, ainsi illustrée par les figures 1 et 2, est fabriquée de la manière suivante.

On prépare les couches de substrat transparent ou translucide 11 dans une feuille de PVC transparent ou translucide.

On dépose par sérigraphie, une couche d'encre à effet miroir 13 sur une face de chaque couche de substrat transparent ou translucide 11.

L'encre à effet miroir est typiquement une encre comportant de l'aluminium, destiné à procurer l'effet miroir.

La composition de cette encre est typiquement:
50 à 93,5 % de 2-butoxyéthanol,
5 à 10% d'aluminium en poudre stabilisé,
1 à 2,5 % d'acétone,
0,5 à 1 % de 3-(2-Aminoethylamino)propyltrimethoxysilane

Après un dépôt uniforme de cette encre sur les deux couches de substrat transparent, on place ces deux couches de substrat encrées respectivement sur les deux faces de la couche de substrat opaque, obtenue à partir d'une feuille de PVC opaque, préférentiellement blanche et colorée dans la masse. Les deux couches de substrat transparent sont plaquées contre la couche de substrat opaque avec la couche d'encre du côté de la couche opaque.

On procède ensuite aux impressions des informations ou décors 14 et 15 puis on met en place les couches de protection 16 et 17 de chaque côté de la carte.

On effectue ensuite la lamination de la carte, avec mise en oeuvre des deux étapes suivantes :
- un premier traitement à une température élevée de 130 °C, sous une pression de 100,56 N/cm² pendant 15 min,
- un second traitement à une température basse de 16 °C sous une pression plus forte de 270,1 N/cm² pendant également une quinzaine de minutes,
cette suite de traitement ayant pour effet de changer l'orientation des pigments de l'encre à effet miroir tout en assurant l'assemblage des différentes couches constitutives, comme cela est bien connu par ailleurs.

Par ailleurs, le fait que les déformations de l'encre sont obtenues lors de l'étape classique de lamination d'une carte multicouche, permet d'intégrer l'obtention de l'effet visuel spécifique dans le processus standard de fabrication et ainsi permet de limiter les coûts de fabrication et de réalisation de cet effet visuel.

## Revendications

1. Procédé de fabrication d'une carte multicouche présentant un effet visuel spécifique, selon lequel on dispose entre une couche de base de substrat opaque (11) et une couche de substrat translucide ou transparente (12), une couche d'encre d'impression apte à se transformer lors d'une étape de lamination de la carte, puis on procède à ladite lamination,
**caractérisé en ce que** la couche d'encre d'impression (13) comporte une encre à effet miroir dont les pigments changent d'orientation lors de la lamination, procurant un effet visuel de tôle froissée ou cabossée.

2. Procédé selon la revendication 1, **caractérisé en ce que** la couche d'encre à effet miroir (13) est déposée sur la couche de substrat transparent ou translucide (12).

3. Procédé selon la revendication 1 ou 2, **caractérisé en ce que** la couche d'encre à effet miroir (13) est déposée par sérigraphie.

4. Procédé selon la revendication 1, **caractérisé en ce que** l'épaisseur de l'encre déposée est de 5 à 15 µm.

5. Procédé selon la revendication 1, **caractérisé en ce que** la couche de substrat opaque (11) est blanche.

6. Procédé selon la revendication 1, **caractérisé en ce que** la couche de substrat opaque (12) et la couche de substrat transparente ou translucide sont en PVC.

7. Procédé selon la revendication 1, **caractérisé en ce que** l'encre à effet miroir a comme composition composition :
50 à 93,5 % de 2-butoxyéthanol,
5 à 10% d'aluminium en poudre stabilisé,
1 à 2,5 % d'acétone,
0,5 à 1 % de 3-(2-Aminoethylamino)propyltrimethoxysilane.

8. Procédé selon la revendication 1, **caractérisé en ce que** l'étape de lamination, propre à générer la fissuration de l'encre à effet miroir, comporte au moins :
- un premier traitement à une température comprise entre 110 et 150 °C, avec une pression de 80 à 120N/cm² pendant 10 à 20 min,
- un second traitement à une température comprise entre 14 et 18 °C avec une pression de 250 à 290 N/cm² pendant 10 à 20 min.

9. Procédé selon la revendication 1, **caractérisé en ce que** on dépose une couche d'encre (13) sur deux couches (12) de PVC transparent, et on place ces deux couches respectivement de part et d'autre de la couche (11) de PVC opaque, pour assurer l'obtention de l'effet de tôle froissée ou cabossée des deux côtés de la carte finalement obtenue.

10. Carte à effet visuel spécifique, comportant une couche de base de substrat opaque (11) et une couche de substrat translucide ou transparente (12, et une couche d'encre d'impression à effet miroir entre les deux couches de substrat, assurant la réflexion de lumière à travers la couche de substrat translucide ou transparente, la couche d'encre d'impression ayant des pigments orientés dans différentes directions, procurant un effet visuel de tôle froissée ou cabossée.

11. Carte selon la revendication 11, **caractérisée en ce que** l'épaisseur de la couche d'encre à effet miroir est de 5 à 15 µm.

12. Carte selon la revendication 11, **caractérisée en ce que** la couche de base de substrat (11) est blanche dans la masse.

13. Carte selon la revendication 11, **caractérisée en ce que** la couche de substrat transparente ou translucide (12), et la couche de substrat opaque (11) sont en PVC.

14. Carte selon la revendication 11, **caractérisée en ce qu'**elle comporte une couche médiane opaque en PVC blanc (11), et **en ce qu'**elle comporte sur les deux faces de cette couche opaque (11) une couche de substrat transparente ou translucides (12) enserrant entre celles-ci et la couche médiane une couche d'encre (13) à effet miroir.

15. Carte selon la revendication 11, **caractérisée en ce que** l'encre à effet miroir est une encre à séchage par rayonnements ultra-violets, de composition : 50 à 93,5 % de 2-butoxyéthanol,
5 à 10% d'aluminium en poudre stabilisé,
1 à 2,5 % d'acétone,
0.5 à 1 % de 3-(2-Aminoethylamino)propyltrimethoxysilane.
